# EUROPEAN PATENT APPLICATION

(11) **EP 4 838 988 A1**
(43) Date of publication of application: **11.11.2026**
(21) Application number: 25741507.5
(22) Date of filing: 15.01.2025
(51) Int. Cl.: H04W 72/21

(54) **TRANSMISSION CONFIGURATION METHOD, AND APPARATUS AND DEVICE**

(30) Priority: 15.01.2024 CN 202410059607
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: WANG, Yajuan, Beijing 100032 (CN); DING, Haiyu, Beijing 100032 (CN); LOU, Mengting, Beijing 100032 (CN); JIN, Jing, Beijing 100032 (CN); MA, Liang, Beijing 100032 (CN); HAN, Lincong, Beijing 100032 (CN); WANG, Qixing, Beijing 100032 (CN); LIU, Guangyi, Beijing 100032 (CN)
(74) Representative: Hertin und Partner Rechts- und Patentanwälte PartG mbB
(86) International application number: PCT/CN2025/072412
(87) International publication number: WO 2025/152946

(57) **Abstract**

The present disclosure provides a transmission configuration method, apparatus, and device, relating to the field of communication technologies. The method includes: receiving first configuration information transmitted by a first network device, where the first configuration information includes a resource configuration for zero-power uplink transmission; and performing uplink transmission according to the first configuration information.

## Description

### CROSS-REFERENCE TO RELATED APPLICATION

The present application is filed based on and claims the priority of Chinese Application No. 202410059607.0, filed on January 15, 2024, the disclosure of which are incorporated in their entireties by reference herein.

### TECHNICAL FIELD

The present disclosure relates to the field of communication technologies, and in particular, to a transmission configuration method, apparatus, and device.

### BACKGROUND

Currently, the collaborative integrated sensing and communication networks built upon large-scale deployed mobile communication networks has advantages such as gains from collaborative reception and fusion processing, no need for self-interference cancellation, no requirement for hardware modifications, and low-cost rapid technology deployment.

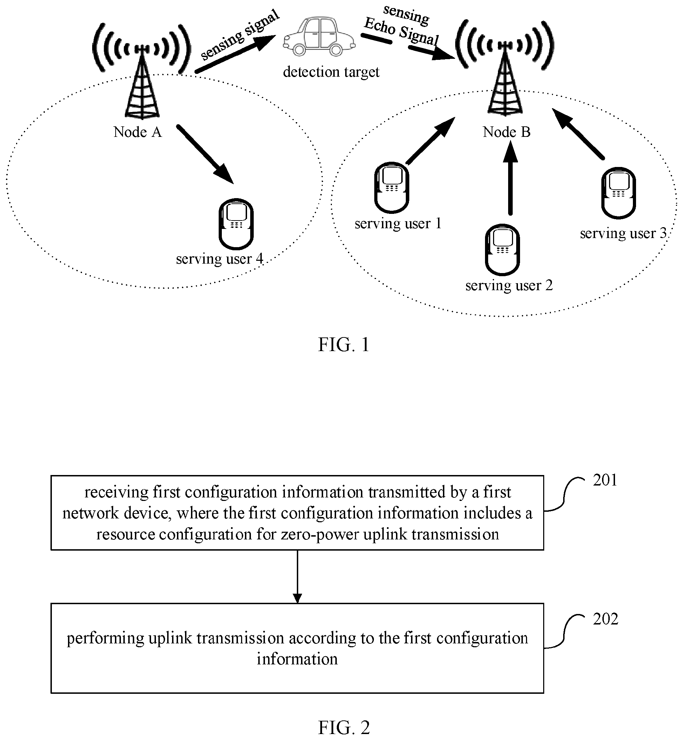

However, in actual networking, the cooperative sensing mode where a base station A performs transmission and a base station B performs reception, requires changing uplink and downlink configurations of the base stations for transmission and reception, which breaks the typical uplink and downlink configurations and introduces interference. As shown in FIG. 1, while a node B receives reflected signals of sensing signals, it also needs to receive uplink signals from its serving users. That is, in addition to receiving reflected signals of sensing signals transmitted by a node A and arriving at the node B after being reflected by a detected target, the node B also receives uplink communication signals transmitted by serving users 1-3 within its coverage area. Thus, the uplink communication signals and the reflected signals of sensing signals interfere with each other.

### SUMMARY

An object of the present disclosure is to provide a transmission configuration method, apparatus, and device, which can solve the problem of mutual interference between uplink transmission and sensing signals.

In order to achieve the above object, one embodiment of the present disclosure provides a transmission configuration method, executed by a terminal, including:
receiving first configuration information transmitted by a first network device, wherein the first configuration information includes a resource configuration for zero-power uplink transmission;
performing uplink transmission according to the first configuration information.

Optionally, a resource indicated by the first configuration information is related to configuration parameters of a sensing signal transmitted by a second network device.

Optionally, the receiving first configuration information transmitted by a first network device, includes:
receiving the first configuration information transmitted by the first network device in case that a conflict exists between the uplink transmission of the terminal and the transmission of the sensing signal.

Optionally, the receiving first configuration information transmitted by a first network device, includes:
receiving the first configuration information transmitted by the first network device in case that a priority of sensing communication is higher than a priority of uplink communication.

Optionally, the first configuration information includes at least one of the following:
resource indication information, wherein the resource indication information is used to indicate a resource for zero-power uplink transmission;
a resource type, wherein the resource type is a type of resources for zero-power uplink transmission;
a first identifier, wherein the first identifier is used to indicate a resource mapping pattern of a sensing signal.

Optionally, the resource indication information includes at least one of the following: a resource set release list, a resource set index, a resource index, or a resource element pattern;
the resource type includes at least one of the following: aperiodic, periodic, or semi-persistent.

Optionally, the first configuration information further includes:
a resource usage, wherein the resource usage includes a first usage, or the first usage and a second usage;
wherein the first usage is used to indicate that a resource indicated by the first configuration information is used for zero-power uplink transmission.

Optionally, the first identifier is a global identifier associated with a resource mapping pattern of the sensing signal, or a local identifier associated with the resource mapping pattern of the sensing signal in the first network device.

In order to achieve the above object, one embodiment of the present disclosure provides a transmission configuration method, performed by a first network device, including:
transmitting first configuration information to a terminal, wherein the first configuration information includes a resource configuration for zero-power uplink transmission.

Optionally, a resource indicated by the first configuration information is associated with a sensing signal transmitted by a second network device.

Optionally, before the transmitting first configuration information to a terminal, the method further includes:
obtaining second configuration information and third configuration information; wherein the second configuration information includes a resource configuration of the sensing signal, and the third configuration information includes a resource configuration of uplink transmission;
determining, according to the second configuration information and the third configuration information, whether a conflict exists between the uplink transmission and transmission of the sensing signal;
wherein the transmitting first configuration information to a terminal, includes:
in a case where a conflict exists, transmitting the first configuration information to the terminal corresponding to the conflict.

Optionally, the transmitting first configuration information to a terminal, includes:
in case that a priority of sensing communication is higher than a priority of uplink communication, transmitting the first configuration information to the terminal.

Optionally, the first configuration information includes at least one of the following:
resource indication information, wherein the resource indication information is used to indicate a resource for zero-power uplink transmission;
a resource type, wherein the resource type is a type of resources for zero-power uplink transmission;
a first identifier, wherein the first identifier is used to indicate a resource mapping pattern of a sensing signal.

Optionally, the resource indication information includes at least one of the following: a resource set release list, a resource set index, a resource index, or a resource element pattern;
the resource type includes at least one of the following: aperiodic, periodic, or semi-persistent.

Optionally, the first configuration information further includes:
a resource usage, wherein the resource usage includes a first usage, or the first usage and a second usage;
wherein the first usage is used to indicate that a resource indicated by the first configuration information is used for zero-power uplink transmission.

Optionally, before the transmitting first configuration information to a terminal, the method further includes:
generating the first identifier based on a second identifier of the sensing signal in a second network device; wherein the first identifier is a global identifier associated with a resource mapping pattern of the sensing signal, or a local identifier associated with the resource mapping pattern of the sensing signal in the first network device.

In order to achieve the above object, one embodiment of the present disclosure provides a transmission configuration apparatus, including:
a receiving module used to receive first configuration information transmitted by a first network device, wherein the first configuration information includes a resource configuration for zero-power uplink transmission;
a transmission module used to perform uplink transmission according to the first configuration information.

In order to achieve the above object, one embodiment of the present disclosure provides a transmission configuration apparatus, including:
a transmission module used to transmit first configuration information to a terminal, wherein the first configuration information includes a resource configuration for zero-power uplink transmission.

In order to achieve the above object, one embodiment of the present disclosure provides a terminal, including: a transceiver; wherein the transceiver is used to:
receive first configuration information transmitted by a first network device, wherein the first configuration information includes a resource configuration for zero-power uplink transmission;
perform uplink transmission according to the first configuration information.

In order to achieve the above object, one embodiment of the present disclosure provides a network device, including: a transceiver; wherein the transceiver is used to:
transmit first configuration information to a terminal, wherein the first configuration information includes a resource configuration for zero-power uplink transmission.

In order to achieve the above object, one embodiment of the present disclosure provides a communication device, including: a transceiver, a processor, a memory, and a program or instruction stored on the memory and executable on the processor; wherein the processor executes the program or instruction to perform the transmission configuration method performed by the terminal, or the transmission configuration method performed by the first network device.

In order to achieve the above object, one embodiment of the present disclosure provides a readable storage medium, including: a program or instruction stored thereon; wherein the program or instruction, when executed by a processor, performs the transmission configuration method performed by the terminal, or the transmission configuration method performed by the first network device.

In order to achieve the above object, one embodiment of the present disclosure provides a computer program product, including: a computer instruction; wherein the computer instruction, when executed by a processor, performs steps of the transmission configuration method performed by the terminal, or the transmission configuration method performed by the first network device.

The beneficial effects of the above technical solution of the present disclosure are as follows.

According to the method of the embodiment of the present disclosure, after receiving the first configuration information transmitted by the first network device, since the first configuration information includes resource configuration for zero-power uplink transmission, the terminal can perform uplink transmission on resources other than the zero-power uplink transmission resources configured by the first configuration information, thereby avoiding conflicts between uplink transmission and sensing signals.

### BRIEF DESCRIPTION OF THE DRAWINGS

FIG. 1 is a schematic diagram of cooperative sensing;
FIG. 2 is a flowchart of a transmission configuration method performed by a terminal according to an embodiment of the present disclosure;
FIG. 3 is a schematic diagram of resource configuration of ZP-RS;
FIG. 4 is a schematic diagram of an application of a transmission configuration method according to an embodiment of the present disclosure;
FIG. 5 is a flowchart of a transmission configuration method performed by a first network device according to an embodiment of the present disclosure;
FIG. 6 is a first schematic diagram showing modules of a transmission configuration apparatus according to an embodiment of the present disclosure;
FIG. 7 is a second schematic diagram showing modules of a transmission configuration apparatus according to an embodiment of the present disclosure;
FIG. 8 is a schematic diagram of a terminal according to an embodiment of the present disclosure;
FIG. 9 is a schematic diagram of a terminal according to another embodiment of the present disclosure; and
FIG. 10 is a schematic diagram of a network device according to an embodiment of the present disclosure.

### DETAILED DESCRIPTION

In order to make the technical problems to be solved by the present disclosure, technical solutions and advantages clearer, a detailed description will be given hereinafter with reference to the accompanying drawings and specific embodiments.

It is to be understood that the phrase "one embodiment" or "an embodiment" throughout the specification means that a particular feature, structure or characteristic associated with one embodiment is included in at least one embodiment of the present disclosure. Thus, appearances of "in one embodiment" or "in an embodiment" in various places throughout the specification are not necessarily all referring to the same embodiment. In addition, these particular features, structures or characteristics may be combined in any suitable manner in one or more embodiments.

In various embodiments of the present disclosure, it is to be understood that sequence numbers of the following processes do not imply an order of execution; the order of execution of the processes should be determined by their functions and internal logic, and should not constitute any limitation on the implementation process of the embodiments of the present disclosure.

In addition, the terms "system" and "network" can be often used interchangeably herein.

In the embodiments provided in the present disclosure, it is to be understood that "B corresponding to A" means that B is associated with A, and B can be determined according to A. However, it should also be understood that determining B according to A does not mean that B is determined only according to A; B may also be determined according to A and/or other information.

For ease of understanding, some contents involved in the embodiments of the present disclosure are explained hereinafter.

### I. Sensing

An integrated sensing and communication system refers to a system that simultaneously possesses both communication and sensing capabilities through integrated design (spectrum resource sharing, integrated air interface, integrated hardware architecture, etc.), multi-point cooperation, and intelligent information interaction. Its operation modes are classified into two categories: independent sensing and cooperative sensing.
1. Independent sensing: a node A transmits an integrated sensing and communication signal, receives reflected signals from a target to obtain characteristic parameters of surrounding environmental attributes, thereby achieving sensing functions such as target detection, positioning, identifying, and tracking. The advantage lies in its ability to complete sensing process for a non-network target without requiring assistance from other on-network nodes, while the main challenges lie in low energy of echo signals and presence of self-interference.
2. Cooperative sensing mode: a Node A transmits an integrated sensing and communication signal, a cooperating node B receives a reflected signal from a to-be-sensed target; and then, through information exchange and fusion processing among one or more nodes, environmental characteristic parameters between the nodes for transmission and reception are obtained. The advantages lie in the absence of transmit-receive self-interference and the ability to obtain cooperative reception processing gain through multi-node collaboration, while the main challenge lies in inter-node synchronization.

### II. Uplink resource configuration

### 1. New Radio (NR) Physical Uplink Shared Channel (PUSCH) Resource Configuration

### (1) Time domain resource configuration:

Time domain allocation type A (slot scheduling), type B (mini-slot scheduling), core parameters k2, starting symbol S, symbol length L, mapping type. That is, only continuous symbol-level configuration of "S+L" is supported in the time domain, and discontinuous configuration is not supported.
1) Standby state: querying a default table through a table lookup index determined by a corresponding field in Downlink Control Information (DCI), to directly obtain k2, S, L, mapping type.
   i) determining a table to be looked up in standby state, i.e., finding the corresponding table according to normal Cyclic Prefix (CP) or extended CP.
   ii) determining a specific row number according to Time Domain Resource Assignment (TDRA) field in DCI0_0 or DCI0_1, and reading k2, S, L, mapping type.
2) Radio Resource Control (RRC) connection state: (RRC configuration list+DCI selection)
   i) obtaining a time domain configuration list from a PUSCH allocation list (PUSCH-allocationList) in a higher-layer RRC signaling PUSCH configuration common (PUSCH-configcommon);
   ii) obtaining k2, mapping type, Start and Length Indicator Value (SLIV) by using a specific configuration in a TDRA field in DCI.

### (2) Frequency domain resource configuration

PUSCH supports continuous and discontinuous frequency domain resource configurations, and its allocation granularity is at a resource block group (RBG) level.
1) Type0: using a bitmap stored in a corresponding field in DCI to indicate RBGs for frequency domain allocation, which supports continuous/discontinuous. Its configuration granularity is RBG size, corresponding to BandWidth Part (BWP) size.
2) Type1: using a "starting point+length" mode, which can only achieve continuous Resource Block (RB) assignment.

### 2. NR Physical Uplink Control Channel (PUCCH) resource configuration

PUCCH is used to carry Uplink Control Information (UCI). Since the current protocol does not support simultaneous transmission of PUCCH and PUSCH, when a conflict exists between the two channels, one of the channels is selected to transmit UCI, with the specific principle: when there is no user data on PUSCH, UCI is transmitted by PUCCH; otherwise, UCI is transmitted by PUSCH.

In a cooperative sensing network, from the perspective of a receiving end, there is a significant difference in powers between the strength of uplink communication signals and the strength of reflected sensing signals. Particularly in medium-to-long-range detection, the strength of the communication signal is much greater than the strength of the reflected signal of the sensing signal. Due to the limited number of bits in a receiver ADC (e.g., 10 bits gives an ADC dynamic range=10*6.02+1.72dB), if the difference between the reflected signal strength of the sensing signal and the communication signal strength is too large, exceeding the usable dynamic range of the hardware ADC, the weaker sensing signal will be overwhelmed and cannot be effectively collected.

The current NR system adopts a co-frequency deployment approach. When scheduling uplink resources (PUCCH, PUSCH), there is no need to consider impact of other network nodes on the resource scheduling of a local cell. For cooperative sensing where A performs transmission and B perform reception, with A on downlink and B on uplink, the scheduling of uplink resources (PUCCH, PUSCH) needs to avoid conflicts with downlink resources used by the base station A for transmitting sensing signals. Meanwhile, since the existing NR uplink resource scheduling configuration only supports continuous symbol-level configuration of "starting symbol+symbol length" in the time domain and does not support discontinuous configuration; and supports continuous (starting symbol+symbol length) and discontinuous bitmap frequency domain resource configuration in the frequency domain, where the frequency domain granularity of the discontinuous bitmap allocation is at the RBG level, and its size is related to the BWP size.

As shown in FIG. 2, a transmission configuration method according to one embodiment of the present disclosure is performed by a terminal and includes:
Step 201: receiving first configuration information transmitted by a first network device, where the first configuration information includes a resource configuration for zero-power uplink transmission;
Step 202: performing uplink transmission according to the first configuration information.

Here, the resource configuration for zero-power uplink transmission included in the first configuration information means that the first configuration information configures zero-power uplink transmission resources, or, it can be understood that the first configuration information configures resources not to be used or resources to be avoided for uplink transmission.

In this way, by executing the steps 201 and 202, after receiving the first configuration information transmitted by the first network device, the terminal can perform uplink transmission (non-zero-power uplink transmission) on resources other than the zero-power uplink transmission resources configured by the first configuration information, thereby avoiding conflicts between uplink transmission and sensing signals.

The terminal can determine candidate resources for uplink transmission. For example, the first network device transmits third configuration information to the terminal, and the third configuration information includes a resource configuration for uplink transmission. At this point, the third configuration information indicates candidate resources for uplink transmission. In this way, by combining the first configuration information, the terminal can learn about target resources for uplink transmission, i.e., resources other than the zero-power uplink transmission resources among the candidate resources. Further, the terminal performs uplink transmission on the target resources.

It is to be noted that, in this embodiment, performing uplink transmission based on the first configuration information means performing zero-power uplink transmission based on the first configuration information, or, it can be understood that no uplink transmission is performed on the zero-power uplink transmission resources configured by the first configuration information. When performing zero-power uplink transmission, no sequence generation is required for the zero-power uplink transmission.

Optionally, in this embodiment, the uplink transmission is a non-zero-power uplink transmission, and is a transmission transmitted by the terminal to the first network device and is an uplink communication between the terminal and the first network device. The uplink transmission includes that the terminal transmits uplink signals, uplink data, etc., to the first network device. The uplink signal may be an uplink reference signal. Correspondingly, performing zero-power uplink transmission may include transmitting zero-power uplink reference signal or zero-power uplink data.

The resource configuration for uplink transmission can be implemented through PUCCH scheduling information, PUSCH scheduling information, and uplink reference signal configuration information.

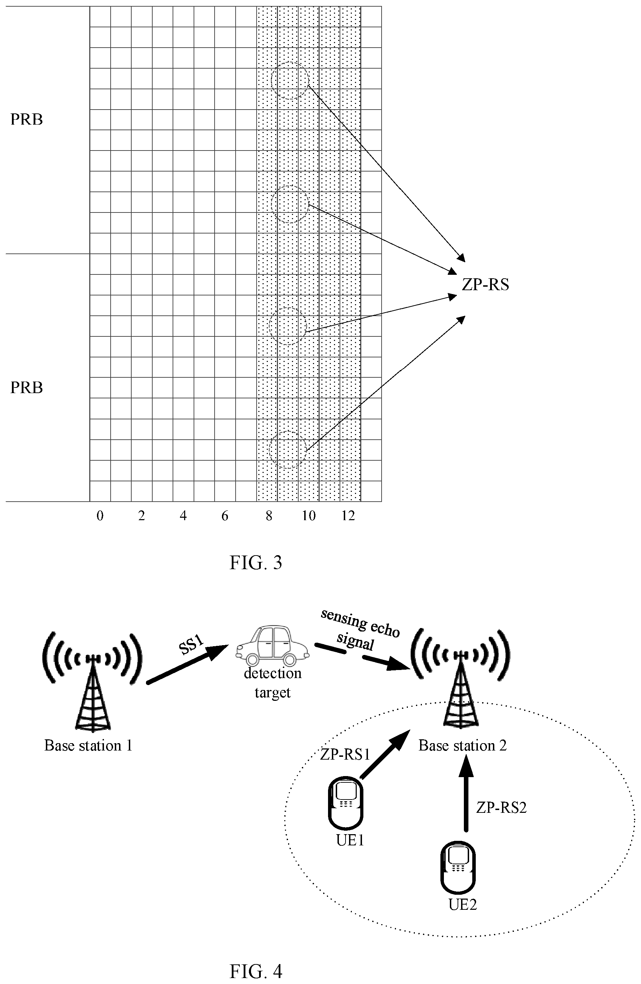

For example, as shown in FIG. 3, candidate resources for uplink transmission are resources included in shaded areas in the figure, and resources for zero-power uplink transmission (e.g., Zero power-Reference Signal (ZP-RS)) configured by the first configuration information are resources circled by dashed lines in the figure. Then, the terminal transmits ZP-RS on the resources circled by dashed lines in the figure, or it is understood that the terminal transmits a reference signal (RS) on resources in the shaded area other than the area circled by dashed lines.

Optionally, the resources indicated by the first configuration information are related to configuration parameters of a sensing signal transmitted by a second network device.

Here, the sensing signal is also referred to as a sensing reference signal or a cooperative sensing signal.

In this embodiment, the second network device transmits a sensing signal, and the first network device receives a reflected signal of the sensing signal. The reflected signal is also referred to as an echo signal or a sensing echo signal. The resources indicated by the first configuration information, i.e., the resources for zero-power uplink transmission configured by the first configuration information, are also referred to as zero-power uplink transmission resources. The configuration parameters of the sensing signal transmitted by the second network device are parameters that can determine echo signal resources of the sensing signal. Therefore, the resources indicated by the first configuration information are related to the configuration parameters of the sensing signal transmitted by the second network device. It can be understood that the zero-power uplink transmission resources are the same as the echo signal resources, or the zero-power uplink transmission resources include the echo signal resources.

Specifically, as shown in FIG. 4, the second network device is a base station 1, and the first network device is a base station 2. The base station 1 transmits a sensing signal, such as SS1. The base station 2 receives a sensing echo signal from a detection target, and meanwhile, the base station 2 also serves User Equipment (UEs, also called terminals) 1-2. It is assumed that the base station 2 transmits first configuration information to UE1 to configure resources for zero-power uplink transmission, and transmits first configuration information to UE2 to configure resources for zero-power uplink transmission, and these resources are the same as the transmission resources of the sensing echo signal, then UE1 and UE2 will not perform uplink transmission on the zero-power uplink transmission resources. That is, UE1 transmits ZP-RS1 on the zero-power uplink transmission resources, and UE2 transmits ZP-RS2 on the zero-power uplink transmission resources.

Thus, in a cooperative sensing networking scenario, the first network device transmits first configuration information to construct a unified uplink and downlink frame structure for the entire network. According to the configuration from the first network device, the terminal does not perform uplink transmission on zero-power uplink transmission resources, thereby avoiding conflicts between reflected signals of sensing signals and uplink transmission.

Optionally, in this embodiment, the receiving first configuration information transmitted by a first network device, includes:
receiving the first configuration information transmitted by the first network device in case that a conflict exists between the uplink transmission of the terminal and the transmission of the sensing signal.

That is, the first network device, upon determining that a conflict exists between the uplink transmission of the terminal and the transmission of the sensing signal, transmits the first configuration information to the terminal to inform the terminal not to perform uplink transmission on the transmission resources of the sensing signal, thereby avoiding conflicts between transmissions.

Here, a conflict between the uplink transmission and the transmission of the sensing signal can also be understood as a conflict between the uplink transmission and transmission of the sensing echo signal.

Optionally, the first network device obtains second configuration information, where the second configuration information includes a resource configuration of the sensing signal. The first network device can also learn about the resource configuration of the terminal's uplink transmission by obtaining third configuration information. In this way, the first network device can determine whether a conflict exists between the uplink transmission of the terminal and the transmission of the sensing signal, according to the second configuration information and the third configuration information.

Specifically, the first network device obtains the second configuration information from the second network device or a sensing server.

In this embodiment, the resource configuration of the sensing signal includes, but is not limited to, one or more of sensing signal identifier (ID), sensing resource time-frequency position, or transmission period, etc. For example, Channel State Information-Reference Signal (CSI-RS) signal is reused to complete a sensing task. The sensing resource time-frequency position includes, but is not limited to, a time domain starting symbol, a number of symbols, and a frequency domain starting Physical Resource Block (PRB), a number of PRBs, a bitmap configuration, a time domain comb, a frequency domain comb, etc. These configurations can be determined from a Non-Zero-Power CSI-RS Resource Set (NZP-CSI-RS-ResourceSet) in a CSI resource configuration (CSI-Resource-config) in a Channel State Information (CSI) configuration (CSI-MeasConfig) in a serving cell configuration (ServingCellConfig).

Of course, if no conflict exists between the uplink transmission and the transmission of the sensing signal, the first network device does not need to transmit the first configuration information to the terminal.

Optionally, the receiving first configuration information transmitted by a first network device, includes:
receiving the first configuration information transmitted by the first network device in case that a priority of sensing communication is higher than a priority of uplink communication.

That is, when the priority of sensing communication is higher than the priority of uplink communication, the first network device transmits the first configuration information to the terminal to inform the terminal not to perform uplink transmission on the transmission resources of the sensing signal, thereby ensuring the smooth operation of sensing and communication.

Specifically, the priority of sensing communication and the priority of uplink communication are predefined or configured. In addition, in case that a priority of sensing communication is higher than a priority of uplink communication, even if the first network device determines that no conflict exists between the uplink transmission of the terminal and the transmission of the sensing signal, the first network device may still transmit the first configuration information.

Of course, if the priority of sensing communication is lower than the priority of uplink communication, the first network device may not transmit the first configuration information to the terminal.

Optionally, in this embodiment, the first configuration information includes at least one of the following:
resource indication information, where the resource indication information is used to indicate a resource for zero-power uplink transmission;
a resource type, where the resource type is a type of resources for zero-power uplink transmission;
a first identifier, where the first identifier is used to indicate a resource mapping pattern of a sensing signal.

That is, when the first configuration information includes the resource indication information, the terminal can determine the resources for zero-power uplink transmission from the indication of the resource indication information. When the first configuration information includes the resource type (resourceType), the terminal can learn the specific type of the resources for zero-power uplink transmission from the resource type. When the first configuration information includes the first identifier, the terminal can learn the resource mapping pattern of the sensing signal from the first identifier.

Optionally, the resource indication information includes at least one of the following: a resource set release list (ResourceSetToReleaseList), a resource set index (ResourceSetId), a resource index (ResourceId), or a resource element pattern (ResourceElementPattern).

The resource type includes at least one of the following: aperiodic, periodic, or semi-persistent.

Optionally, the first configuration information further includes:
a resource usage, where the resource usage includes a first usage, or the first usage and a second usage;
where the first usage is used to indicate that the resources indicated by the first configuration information are used for zero-power uplink transmission.

Here, in case that the resource usage included in the first configuration information only includes the first usage, it can be considered that the implementation of the first configuration information is a dedicated configuration for zero-power uplink transmission resources. In case that the resource usage included in the first configuration information includes the first usage and the second usage, it can be considered that the implementation of the first configuration information reuses the configuration of the second usage to configure zero-power uplink transmission resources. The second usage is a usage other than indicating resources for zero-power uplink transmission.

For example, in an example 1, implementation of a dedicated configuration for zero-powr uplink transmission resources, such as an zp-rs-Config configuration, is to adds a zp-rs-Config configuration in an RRC signaling UplinkBWP configuration. Specifically, the structure of the UplinkBWP configuration is as follows:

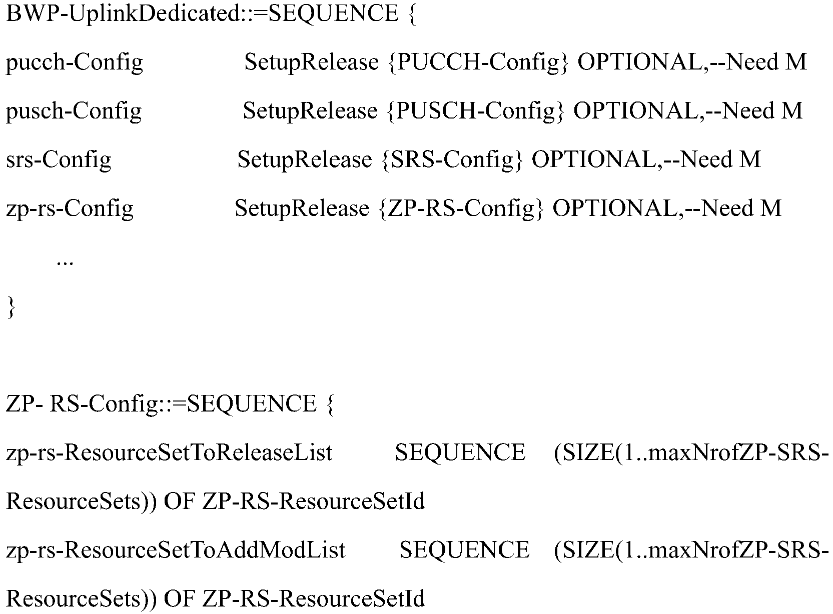

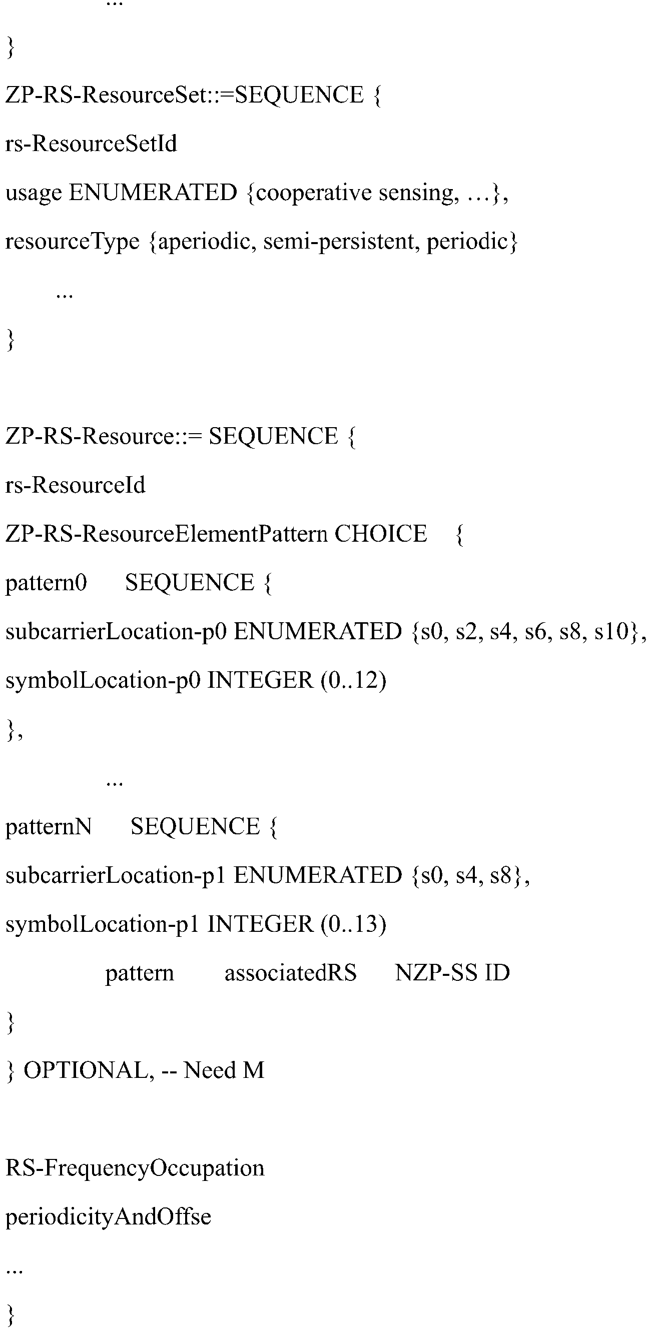

In this way, zp-rs-Config is used to configure an uplink zero-power reference signal to avoid sensing resources for uplink communication, thereby preventing interference between sensing echo signals and uplink transmission in scenarios such as cooperative sensing.

As another example, in an example 2, the configuration of zero-power uplink transmission resources reuses a Sounding Reference Signal (SRS) configuration. A new usage is added in an SRS Resource Set Information Element (SRS-ResourceSet IE) in an SRS-Config in an RRC signaling uplinkBWP configuration. The enumerated usages include a first usage and a second usage. The first usage is, for example, cooperative sensing; the second usage is, for example, beam management (beamManagement), codebook, nonCodebook, antennaSwitching. That is, in the SRS-ResourceSet IE, ENUMERATED {beamManagement, codebook, nonCodebook, antennaSwitching, cooperative sensing}. Specifically, the structure of the UplinkBWP configuration is as follows:

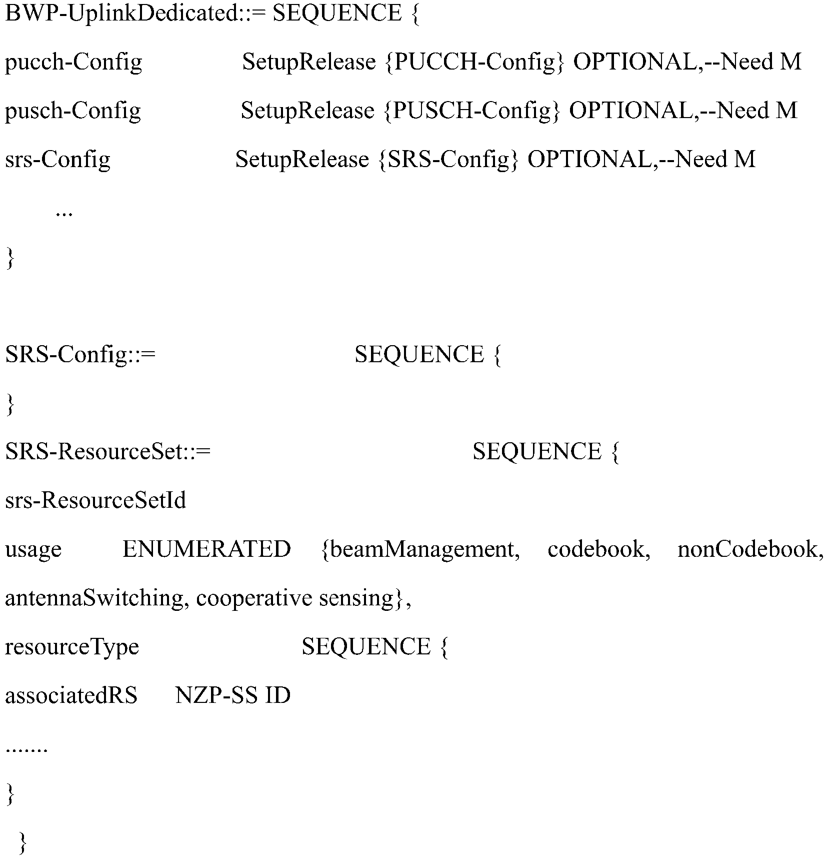

In this way, in SRS-Config, when usage="cooperative sensing", resources associated with resources for a configure and collaborate-sensing signal (NZP-SS) (SS1), are used to prevent interference between sensing echo signals and uplink transmission.

For the method of the example 2, new patterns may be supplemented later according to communication and sensing requirements.

Additionally, optionally, in this embodiment, the first identifier is a global identifier associated with a resource mapping pattern of the sensing signal, or a local identifier associated with the resource mapping pattern of the sensing signal in the first network device.

Here, the first identifier in the first configuration information may be the NZP-SS ID as in the above example 1 or 2.

It is to be understood that the identifier associated with the resource mapping pattern of the sensing signal learned by the first network device may be notified by the second network device. In case that an identifier associated with the resource mapping pattern of the sensing signal notified by the second network device, i.e., a second identifier, is its local identifier, there may be a situation where the terminal cannot recognize it. Thus, the first network device converts the second identifier into a global identifier or a local identifier of the first network device, and carries it in the first configuration information to be transmitted to the terminal. Of course, in case that the second identifier notified by the second network device to the first network device is a global identifier, no further conversion is needed, and the second identifier is directly carried as the first identifier in the first configuration information and transmitted to the terminal.

In summary, according to the transmission configuration method in the embodiments of the present disclosure, the terminal receives first configuration information including a resource configuration for zero-power uplink transmission, transmitted by the first network device, and performs uplink transmission based on the first configuration information, thereby avoiding conflicts between reflected signals of sensing signals and uplink transmission, and consequently avoiding failure of sensing tasks. Without changing resource configuration modes for PUSCH and PUCCH, by standardizing the UE's resource conflict avoidance behavior, the UE can obtain resources for implementing sensing functions, thereby providing a certain degree of forward compatibility.

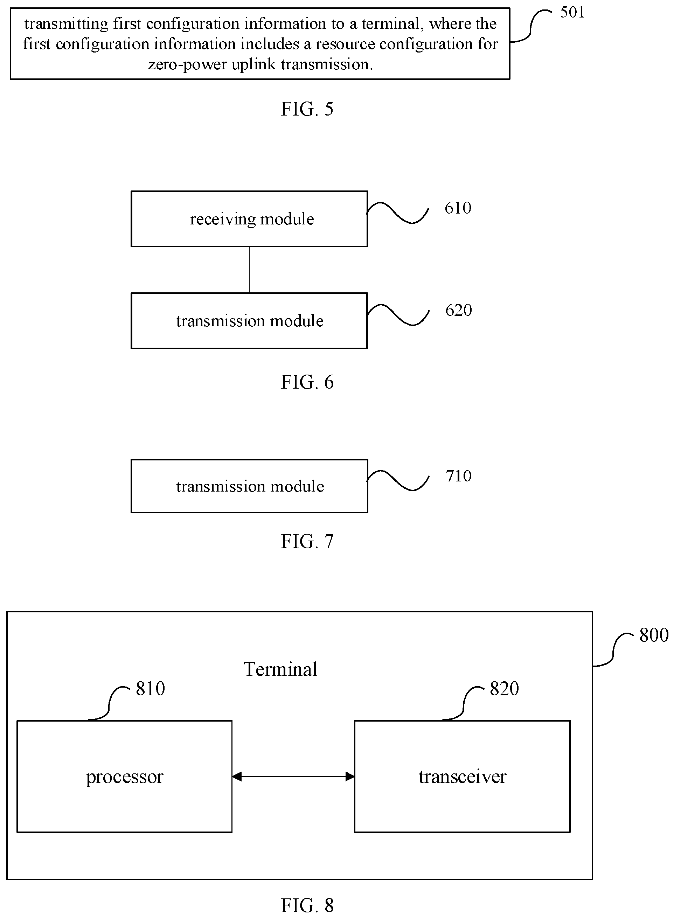

As shown in FIG. 5, a transmission configuration method according to one embodiment of the present disclosure is performed by a first network device and includes:
Step 501: transmitting first configuration information to a terminal, where the first configuration information includes a resource configuration for zero-power uplink transmission.

Through this step, the first network device notifies the terminal of the resource configuration for zero-power uplink transmission, so that after receiving the first configuration information, the terminal can perform uplink transmission based on the first configuration information, thereby avoiding conflicts between reflected signals of sensing signals and uplink transmission, and consequently avoiding failure of sensing tasks.

Optionally, the resources indicated by the first configuration information are associated with a sensing signal transmitted by a second network device.

Optionally, before transmitting the first configuration information to the terminal, the method includes:
obtaining second configuration information and third configuration information; where the second configuration information includes a resource configuration of the sensing signal, and the third configuration information includes a resource configuration of uplink transmission;
determining, according to the second configuration information and the third configuration information, whether a conflict exists between the uplink transmission and transmission of the sensing signal.

The transmitting first configuration information to the terminal, includes:
in a case where a conflict exists, transmitting the first configuration information to the terminal corresponding to the conflict.

Optionally, the transmitting first configuration information to the terminal, includes:
in case that a priority of sensing communication is higher than a priority of uplink communication, transmitting the first configuration information to the terminal.

Optionally, the first configuration information includes at least one of the following:
resource indication information, where the resource indication information is used to indicate a resource for zero-power uplink transmission;
a resource type, where the resource type is a type of resources for zero-power uplink transmission;
a first identifier, where the first identifier is used to indicate a resource mapping pattern of a sensing signal.

Optionally, the resource indication information includes at least one of the following: a resource set release list, a resource set index, a resource index, or a resource element pattern.

The resource type includes at least one of the following: aperiodic, periodic, or semi-persistent.

Optionally, the first configuration information further includes:
a resource usage, where the resource usage includes a first usage, or the first usage and a second usage;
where the first usage is used to indicate that the resources indicated by the first configuration information are used for zero-power uplink transmission.

Optionally, before transmitting the first configuration information to the terminal, the method further includes:
generating the first identifier based on a second identifier of the sensing signal in a second network device; where the first identifier is a global identifier associated with a resource mapping pattern of the sensing signal, or a local identifier associated with the resource mapping pattern of the sensing signal in the first network device.

It is to be noted that this method is implemented in coordination with the above method performed by the terminal. The implementation of the above method embodiment performed by the terminal is applicable to this method and can achieve the same technical effects, which will not be repeated here.

As shown in FIG. 6, one embodiment of the present disclosure provides a transmission configuration apparatus, including:
a receiving module 610 used to receive first configuration information transmitted by a first network device, where the first configuration information includes a resource configuration for zero-power uplink transmission;
a transmission module 620 used to perform uplink transmission according to the first configuration information.

Optionally, the resources indicated by the first configuration information are related to configuration parameters of a sensing signal transmitted by a second network device.

Optionally, the receiving module is further used to:
receive the first configuration information transmitted by the first network device in case that a conflict exists between the uplink transmission of the terminal and the transmission of the sensing signal.

Optionally, the receiving module is further used to:
receive the first configuration information transmitted by the first network device in case that a priority of sensing communication is higher than a priority of uplink communication.

Optionally, the first configuration information includes at least one of the following:
resource indication information, where the resource indication information is used to indicate a resource for zero-power uplink transmission;
a resource type, where the resource type is a type of resources for zero-power uplink transmission;
a first identifier, where the first identifier is used to indicate a resource mapping pattern of a sensing signal.

Optionally, the resource indication information includes at least one of the following: a resource set release list, a resource set index, a resource index, or a resource element pattern.

The resource type includes at least one of the following: aperiodic, periodic, or semi-persistent.

Optionally, the first configuration information further includes:
a resource usage, where the resource usage includes a first usage, or the first usage and a second usage;
where the first usage is used to indicate that the resources indicated by the first configuration information are used for zero-power uplink transmission.

Optionally, the first identifier is a global identifier associated with a resource mapping pattern of the sensing signal, or a local identifier associated with the resource mapping pattern of the sensing signal in the first network device.

The apparatus receives first configuration information including a resource configuration for zero-power uplink transmission, transmitted by the first network device, and performs uplink transmission based on the first configuration information, thereby avoiding conflicts between reflected signals of sensing signals and uplink transmission, and consequently avoiding failure of sensing tasks.

It is to be noted that the apparatus of the embodiment of the present disclosure is an apparatus applying the above transmission configuration method performed by the terminal. The implementation of the above method embodiment is applicable to this apparatus and can achieve the same technical effects, which will not be repeated here.

As shown in FIG. 7, one embodiment of the present disclosure provides a transmission configuration apparatus, including:
a transmission module 710 used to transmit first configuration information to a terminal, where the first configuration information includes a resource configuration for zero-power uplink transmission.

Optionally, the resources indicated by the first configuration information are associated with a sensing signal transmitted by a second network device.

Optionally, the apparatus includes:
an obtaining module used to obtain second configuration information and third configuration information; where the second configuration information includes a resource configuration of the sensing signal, and the third configuration information includes a resource configuration of uplink transmission;
a first processing module used to determine, according to the second configuration information and the third configuration information, whether a conflict exists between the uplink transmission and transmission of the sensing signal.

The transmission module is further used to:
in a case where a conflict exists, transmit the first configuration information to the terminal corresponding to the conflict.

Optionally, the transmission module is further used to:
in case that a priority of sensing communication is higher than a priority of uplink communication, transmit the first configuration information to the terminal.

Optionally, the first configuration information includes at least one of the following:
resource indication information, where the resource indication information is used to indicate a resource for zero-power uplink transmission;
a resource type, where the resource type is a type of resources for zero-power uplink transmission;
a first identifier, where the first identifier is used to indicate a resource mapping pattern of a sensing signal.

Optionally, the resource indication information includes at least one of the following: a resource set release list, a resource set index, a resource index, or a resource element pattern.

The resource type includes at least one of the following: aperiodic, periodic, or semi-persistent.

Optionally, the first configuration information further includes:
a resource usage, where the resource usage includes a first usage, or the first usage and a second usage;
where the first usage is used to indicate that the resources indicated by the first configuration information are used for zero-power uplink transmission.

Optionally, the apparatus further includes:
a second processing module used to generate the first identifier based on a second identifier of the sensing signal in a second network device; where the first identifier is a global identifier associated with a resource mapping pattern of the sensing signal, or a local identifier associated with the resource mapping pattern of the sensing signal in the first network device.

The apparatus transmits first configuration information to notify the terminal of a resource configuration for zero-power uplink transmission, so that after receiving the first configuration information, the terminal can perform uplink transmission based on the first configuration information, thereby avoiding conflicts between reflected signals of sensing signals and uplink transmission, and consequently avoiding failure of sensing tasks.

It is to be noted that the apparatus of the embodiment of the present disclosure is an apparatus applying the above transmission configuration method performed by the first network device. The implementation of the above method embodiment is applicable to this apparatus and can achieve the same technical effects, which will not be repeated here.

As shown in FIG. 8, one embodiment of the present disclosure provides a terminal, including a transceiver 820. The transceiver 820 is used to:
receive first configuration information transmitted by a first network device, where the first configuration information includes a resource configuration for zero-power uplink transmission;
perform uplink transmission according to the first configuration information.

Optionally, the terminal further includes a processor 810, and the transceiver 820 performs reception and transmission under the control of the processor 810.

Optionally, the resources indicated by the first configuration information are related to configuration parameters of a sensing signal transmitted by a second network device.

Optionally, the transceiver 820 is further used to:
receive the first configuration information transmitted by the first network device in case that a conflict exists between the uplink transmission of the terminal and the transmission of the sensing signal.

Optionally, the transceiver 820 is further used to:
receive the first configuration information transmitted by the first network device in case that a priority of sensing communication is higher than a priority of uplink communication.

Optionally, the first configuration information includes at least one of the following:
resource indication information, where the resource indication information is used to indicate a resource for zero-power uplink transmission;
a resource type, where the resource type is a type of resources for zero-power uplink transmission;
a first identifier, where the first identifier is used to indicate a resource mapping pattern of a sensing signal.

Optionally, the resource indication information includes at least one of the following: a resource set release list, a resource set index, a resource index, or a resource element pattern.

The resource type includes at least one of the following: aperiodic, periodic, or semi-persistent.

Optionally, the first configuration information further includes:
a resource usage, where the resource usage includes a first usage, or the first usage and a second usage;
where the first usage is used to indicate that the resources indicated by the first configuration information are used for zero-power uplink transmission.

Optionally, the first identifier is a global identifier associated with a resource mapping pattern of the sensing signal, or a local identifier associated with the resource mapping pattern of the sensing signal in the first network device.

The terminal receives first configuration information including a resource configuration for zero-power uplink transmission, transmitted by the first network device, and performs uplink transmission based on the first configuration information, thereby avoiding conflicts between reflected signals of sensing signals and uplink transmission, and consequently avoiding failure of sensing tasks.

One embodiment of the present disclosure provides a network device, including a transceiver. The transceiver being used to:
transmit first configuration information to a terminal, where the first configuration information includes a resource configuration for zero-power uplink transmission.

Optionally, the resources indicated by the first configuration information are associated with a sensing signal transmitted by a second network device.

Optionally, the network device further includes a processor; and the processor is used to:
obtain second configuration information and third configuration information; where the second configuration information includes a resource configuration of the sensing signal, and the third configuration information includes a resource configuration of uplink transmission;
determine, according to the second configuration information and the third configuration information, whether a conflict exists between the uplink transmission and transmission of the sensing signal.

The transceiver is further used to:
in a case where a conflict exists, transmit the first configuration information to the terminal corresponding to the conflict.

Optionally, the transceiver is further used to:
in case that a priority of sensing communication is higher than a priority of uplink communication, transmit the first configuration information to the terminal.

Optionally, the first configuration information includes at least one of the following:
resource indication information, where the resource indication information is used to indicate a resource for zero-power uplink transmission;
a resource type, where the resource type is a type of resources for zero-power uplink transmission;
a first identifier, where the first identifier is used to indicate a resource mapping pattern of a sensing signal.

Optionally, the resource indication information includes at least one of the following: a resource set release list, a resource set index, a resource index, or a resource element pattern.

The resource type includes at least one of the following: aperiodic, periodic, or semi-persistent.

Optionally, the first configuration information further includes:
a resource usage, where the resource usage includes a first usage, or the first usage and a second usage;
where the first usage is used to indicate that the resources indicated by the first configuration information are used for zero-power uplink transmission.

Optionally, the processor is further used to:
generate the first identifier based on a second identifier of the sensing signal in a second network device; where the first identifier is a global identifier associated with a resource mapping pattern of the sensing signal, or a local identifier associated with the resource mapping pattern of the sensing signal in the first network device.

The network device is a first network device, and transmits first configuration information to notify the terminal of a resource configuration for zero-power uplink transmission, so that after receiving the first configuration information, the terminal can perform uplink transmission based on the first configuration information, thereby avoiding conflicts between reflected signals of sensing signals and uplink transmission, and consequently avoiding failure of sensing tasks.

One embodiment of the present disclosure provides a communication device, including: a transceiver, a processor, a memory, and a program or instruction stored on the memory and executable on the processor. The processor executes the program or instruction to perform the steps of the above transmission configuration method performed by the terminal, or the above transmission configuration method performed by the first network.

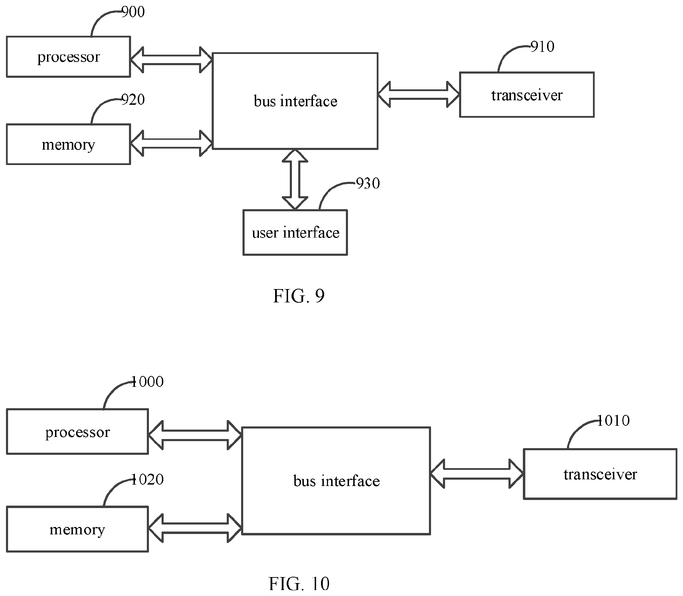

Specifically, the communication device is a terminal. As shown in FIG. 9, the communication device includes a transceiver 910, a processor 900, a memory 920, and a program or instruction stored on the memory 920 and executable on the processor 900. The processor 900 executes the program or instruction to perform the above transmission configuration method performed by the terminal.

The transceiver 910 is used to receive and transmit data under the control of the processor 900.

In FIG. 9, the bus architecture may include any number of interconnected buses and bridges, specifically linking various circuits represented by the processor 900 and the memory 920. The bus architecture may also link various other circuits such as peripheral devices, voltage regulators, and power management circuits, which are well-known in the art and therefore will not be further described herein. The bus interface provides an interface. The transceiver 910 may include multiple elements, including a transmitter and a receiver, providing units for communicating with various other devices over transmission media. For different user equipment, the user interface 930 may also be an interface capable of connecting external or internal devices, where the connected devices include but are not limited to a keypad, display, speaker, microphone, joystick, etc.

The processor 900 is responsible for managing the bus architecture and general processing, and the memory 920 may store data used by the processor 900 when performing operations.

Specifically, the communication device is a network device, and the network device is a first network device. As shown in FIG. 10, the communication device includes a transceiver 1010, a processor 1000, a memory 1020, and a program or instruction stored on the memory 1020 and executable on the processor 1000. The processor 1000 executes the program or instruction to perform the above transmission configuration method executed by the first network device.

The transceiver 1010 is used to receive and transmit data under the control of the processor 1000.

In FIG. 10, a bus architecture may include any number of interconnected bus and bridge. Specifically, various circuits of one or more processors, which are represented by the processor 1000, and one or more memories, which are represented by the memory 1020, are linked together. The bus architecture may link various other circuits, such as a peripheral device, voltage regulator and a power management circuit together. These features are well known in this field; therefore, this disclosure does not make further description on these features. The bus interface provides an interface. The transceiver 1010 may be multiple elements, including a transmitter and a receiver and provide units, which communicate with other devices on the transmission medium. The processor 1000 is responsible for managing the bus architecture and the normal processing. The memory 1020 may be used to store data used by the processor 1000 for performing operations.

One embodiment of the present disclosure provides a readable storage medium including a program or instruction stored thereon. The program or instruction, when executed by a processor, performs steps of the above transmission configuration method performed by the terminal, or the above transmission configuration method performed by the first network device, and the same technical effects can be achieved. To avoid repetition, details are not repeated here.

The processor is the processor of the communication device in the above embodiments. The readable storage medium includes a computer-readable storage medium, such as a computer Read-Only Memory (ROM), a Random Access Memory (RAM), a magnetic disk, or an optical disc.

One embodiment of the present disclosure further provides a computer program product, including computer instructions. The computer instructions, when executed by a processor, performs the processes of the above transmission configuration method embodiments, and the same technical effects can be achieved. To avoid repetition, details are not repeated here.

It is to be further noted that the terminal described in this specification includes, but is not limited to, smart phone, tablet computer, etc., and many of the described functional components are referred to as modules in order to more particularly emphasize the independence of their implementation.

In the embodiments of the present disclosure, modules may be implemented by software for execution by various types of processors. For example, an identified executable code module may include one or more physical or logical blocks of computer instructions, for example, which may be constructed as an object, procedure, or function. Nevertheless, the executable code of the identified modules need not be physically located together, but may include different instructions stored in different locations which, when logically combined together, constitute the module and achieve the stated purpose of the module.

In practice, an executable code module may be a single instruction or many instructions, and may even be distributed across several different code segments, distributed among different programs, and across multiple memory devices. Similarly, operational data may be identified within the module and may be implemented in any suitable form and organized within any suitable type of data structure. The operational data may be collected as a single data set, or may be distributed across different locations (including on different storage devices), and may at least partially exist only as electronic signals on a system or network.

When modules can be implemented by software, considering the level of existing hardware technology, for modules that can be implemented by software, those skilled in the art can build corresponding hardware circuits to implement corresponding functions without considering cost. The hardware circuits include conventional very large scale integration circuits (VLSI) or gate arrays, as well as existing semiconductors such as logic chips, transistors, or other discrete components. Modules may also be implemented by programmable hardware devices, such as field programmable gate arrays, programmable array logic, programmable logic devices, etc.

The above exemplary embodiments are described with reference to the accompanying drawings. Many different forms and embodiments are possible without departing from the spirit and teachings of the present disclosure. Therefore, the present disclosure should not be construed as limited to the exemplary embodiments set forth herein. Rather, these exemplary embodiments are provided so that the present disclosure will be thorough and complete, and will convey the scope of the disclosure to those skilled in the art. In the drawings, component sizes and relative sizes may be exaggerated for clarity. The terminology used herein is for the purpose of describing particular exemplary embodiments only and is not intended to be limiting. As used herein, the singular forms "a", "an" and "the" are intended to include the plural forms as well, unless the context clearly indicates otherwise. It will be further understood that the terms "include" and/or "comprise", when used in this specification, specify the presence of stated features, integers, steps, operations, elements, and/or components, but do not preclude the presence or addition of one or more other features, integers, steps, operations, elements, components, and/or groups thereof. Unless otherwise indicated, when a value range is recited, the range includes upper and lower limits thereof and any subranges therebetween.

The above are preferred embodiments of the present disclosure. It is to be noted that for those of ordinary skill in the art, several improvements and modifications can be made without departing from the principles described in the present disclosure, and these improvements and modifications should also be regarded as the protection scope of the present disclosure.

## Claims

1. A transmission configuration method, performed by a terminal, comprising:
receiving first configuration information transmitted by a first network device, wherein the first configuration information comprises a resource configuration for zero-power uplink transmission; and
performing uplink transmission according to the first configuration information.

2. The method according to claim 1, wherein a resource indicated by the first configuration information is related to a configuration parameter of a sensing signal transmitted by a second network device.

3. The method according to claim 2, wherein the receiving first configuration information transmitted by a first network device, comprises:
receiving, in case that a conflict exists between the uplink transmission of the terminal and transmission of the sensing signal, the first configuration information transmitted by the first network device.

4. The method according to any one of claims 1 to 3, wherein the receiving first configuration information transmitted by a first network device, comprises:
receiving, in case that a priority of sensing communication is higher than a priority of the uplink communication, the first configuration information transmitted by the first network device.

5. The method according to any one of claims 1 to 4, wherein the first configuration information comprises at least one of the following:
resource indication information, wherein the resource indication information is used to indicate a resource for zero-power uplink transmission;
a resource type, wherein the resource type is a type of a resource for zero-power uplink transmission;
a first identifier, wherein the first identifier is used to indicate a resource mapping pattern of a sensing signal.

6. The method according to claim 5, wherein the resource indication information comprises at least one of the following: a resource set release list, a resource set index, a resource index, or a resource element pattern;
the resource type comprises at least one of the following: aperiodic, periodic, or semi-persistent.

7. The method according to claim 5, wherein the first configuration information further comprises:
a resource usage, wherein the resource usage includes a first usage, or the first usage and a second usage;
wherein the first usage is used to indicate that the resource indicated by the first configuration information is used for zero-power uplink transmission.

8. The method according to claim 5, wherein the first identifier is a global identifier associated with a resource mapping pattern of the sensing signal, or a local identifier associated with the resource mapping pattern of the sensing signal in the first network device.

9. A transmission configuration method, performed by a first network device, comprising:
transmitting first configuration information to a terminal; wherein the first configuration information comprises a resource configuration for zero-power uplink transmission.

10. The method according to claim 9, wherein a resource indicated by the first configuration information is associated with a sensing signal transmitted by a second network device.

11. The method according to claim 10, wherein before the transmitting first configuration information to a terminal, the method further comprises:
obtaining second configuration information and third configuration information; wherein the second configuration information comprises a resource configuration of the sensing signal, and the third configuration information comprises a resource configuration of uplink transmission;
determining, according to the second configuration information and the third configuration information, whether a conflict exists between the uplink transmission and transmission of the sensing signal;
wherein the transmitting first configuration information to a terminal, comprises:
in a case where a conflict exists, transmitting the first configuration information to the terminal corresponding to the conflict.

12. The method according to any one of claims 9 to 11, wherein the transmitting first configuration information to a terminal, comprises:
in case that a priority of sensing communication is higher than a priority of the uplink communication, transmitting the first configuration information to the terminal.

13. The method according to any one of claims 9 to 12, wherein the first configuration information comprises at least one of the following:
resource indication information, wherein the resource indication information is used to indicate a resource for zero-power uplink transmission;
a resource type, wherein the resource type is a type of a resource for zero-power uplink transmission;
a first identifier, wherein the first identifier is used to indicate a resource mapping pattern of a sensing signal.

14. The method according to claim 13, wherein the resource indication information comprises at least one of the following: a resource set release list, a resource set index, a resource index, or a resource element pattern;
the resource type comprises at least one of the following: aperiodic, periodic, or semi-persistent.

15. The method according to claim 13, wherein the first configuration information further comprises:
a resource usage, wherein the resource usage comprises a first usage, or the first usage and a second usage;
wherein the first usage is used to indicate that the resource indicated by the first configuration information is used for zero-power uplink transmission.

16. The method according to claim 13, wherein before the transmitting first configuration information to a terminal, the method further comprises:
generating the first identifier based on a second identifier of the sensing signal in a second network device; wherein the first identifier is a global identifier associated with a resource mapping pattern of the sensing signal, or a local identifier associated with the resource mapping pattern of the sensing signal in the first network device.

17. A transmission configuration apparatus, comprising:
a receiving module used to receive first configuration information transmitted by a first network device, wherein the first configuration information comprises a resource configuration for zero-power uplink transmission; and
a transmission module used to perform uplink transmission according to the first configuration information.

18. A transmission configuration apparatus, comprising:
a transmission module used to transmit first configuration information to a terminal, wherein the first configuration information comprises a resource configuration for zero-power uplink transmission.

19. A terminal, comprising: a transceiver; wherein the transceiver is used to:
receive first configuration information transmitted by a first network device, wherein the first configuration information comprises a resource configuration for zero-power uplink transmission; and
perform uplink transmission according to the first configuration information.

20. A network device, comprising: a transceiver; wherein the transceiver is used to:
transmit first configuration information to a terminal, wherein the first configuration information comprises a resource configuration for zero-power uplink transmission.

21. A communication device, comprising: a transceiver, a processor, a memory, and a program or instruction stored on the memory and executable on the processor; wherein the processor executes the program or instruction to perform the transmission configuration method according to any one of claims 1 to 8, or the transmission configuration method according to any one of claims 9 to 16.

22. A readable storage medium, comprising: a program or instruction stored thereon; wherein the program or instruction, when executed by a processor, performs the transmission configuration method according to any one of claims 1 to 8, or the transmission configuration method according to any one of claims 9 to 16.

23. A computer program product, comprising: a computer instruction; wherein the computer instruction, when executed by a processor, performs steps of the transmission configuration method according to any one of claims 1 to 8, or perform steps of the transmission configuration method according to any one of claims 9 to 16.
